# EUROPEAN PATENT SPECIFICATION

(11) **EP 4 516 612 B1**
(45) Date of publication and mention of the grant of the patent: **25.02.2026**
(21) Application number: 23194880.3
(22) Date of filing: 01.09.2023
(51) Int. Cl.: B60W 40/13, B62D 61/12

(54) **HANDLING AN AXLE CONFIGURATION OF A VEHICLE**
HANDHABUNG EINER ACHSENKONFIGURATION EINES FAHRZEUGS
MANIPULATION D'UNE CONFIGURATION D'ESSIEU D'UN VÉHICULE

(43) Date of publication of application: 05.03.2025
(73) Proprietor: VOLVO TRUCK CORPORATION, 405 08 Göteborg (SE)
(72) Inventor: SUBRAMANIAN, Chidambaram, Greensboro, 27407 (US)
(74) Representative: Valea AB

(56) References cited:
- EP-A2- 2 949 532
- DE-A1- 102020 123 221
- US-A1- 2022 041 172

## Description

### TECHNICAL FIELD

The invention relates generally to handling an axle configuration. In particular aspects, the invention relates to predicting whether there has been a change in an axle configuration. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

To modify capabilities and/or operating behaviour of a vehicle such as to improve load capacity of the vehicle, a vehicle owner may modify the vehicle by adding and/or removing axles to the vehicle.

However, operational parameters of the vehicle such as brake parameters may be configured for a set number of axles and axle positions of the vehicle. Hence, as the number of axles change, an operational performance of the vehicle may be degraded. DE102020123221A1 discusses how to determine a loading state of a vehicle. In particular, it discusses how to measure a load on a given axel in relation to the vehicle, and based on this information, an axle configuration may be determined.

### SUMMARY

According to a first aspect of the invention, a computer system comprising processing circuitry configured to handle an axle configuration of a vehicle is provided. The axle configuration is at least indicative of a number of axles of the vehicle. The processing circuitry is further configured to obtain vehicle condition data indicative of at least one load applied to the vehicle. The processing circuitry is further configured to obtain the axle configuration of the vehicle. The processing circuitry is further configured to estimate a current weight of the vehicle based on the obtained vehicle condition data and based on the axle configuration of the vehicle. The processing circuitry is further configured to obtain a previously estimated weight of the vehicle. The processing circuitry is further configured to, based on a difference between the previously estimated weight and the current weight of the vehicle, predict whether there has been a change in the axle configuration of the vehicle.

The first aspect of the invention may seek to improve operability of the vehicle and/or to improve traffic safety.

A technical benefit may include enabling to adapt configurations, parameters, and/or models relating to operating the vehicle when it is predicted that there has been a change in the axle configuration. Additionally or alternatively, when it is predicted that there has been a change in the axle configuration, the vehicle may be enabled to alert that a change in axle configuration has been made, e.g., to any one or more out of: other traffic participants, to insurance companies, a manufacturer of the vehicle, relevant authorities, the driver, and/or other vehicle systems, etc.

Optionally in some examples, including in at least one preferred example, when predicting that there has been a change in the axle configuration of the vehicle, the processing circuitry is further configured to, based on the difference between the previously estimated weight and the current weight of the vehicle, predict an updated axle configuration of the vehicle.

A technical benefit may include enabling to adapt configurations, parameters, and/or models, e.g., brake parameters, of the vehicle based on the updated axle configuration.

Optionally in some examples, including in at least one preferred example, the processing circuitry is further configured to detect the fulfillment of a triggering condition. In these examples, the processing circuitry is configured to estimate the current weight of the vehicle and/or to obtain the vehicle condition data in response to the fulfilment of the triggering condition. In some of these examples, the triggering condition comprises any one or more out of:
- the vehicle is detached from a trailer,
- the vehicle has travelled at least a first predefined distance since estimation of the previously estimated weight,
- a time period since estimating the previously estimated weight exceeds a threshold.

A technical benefit may include improved accuracy of predicting whether or not there has been a change in the axle configuration, or improved accuracy of predicting an updated axle configuration.

Optionally in some examples, including in at least one preferred example, the processing circuitry is further configured to adapt one or more parameters used for controlling the vehicle based on the updated axle configuration.

A technical benefit may include improved operability and performance of the vehicle.

Optionally in some examples, including in at least one preferred example, the updated axle configuration is indicative of any one or more out of:
- a number of axles added to, or removed from, the axle configuration,
- a type of one or more axles added to, or removed from, the axle configuration,
- a position of one or more axles added to, or removed from, the axle configuration,

A technical benefit may include improved operability and performance of the vehicle. This is since the vehicle may be configured appropriately based on the increased detail of the axle configuration.

Optionally in some examples, including in at least one preferred example, the processing circuitry is further configured to predict the updated axle configuration based on a trained statistical model, or based on a predefined heuristic model.

A technical benefit may include improved accuracy of predicting whether or not there has been a change in the axle configuration, or improved accuracy of predicting an updated axle configuration.

Optionally in some examples, including in at least one preferred example, the trained statistical model is trained based on training data of one or more training vehicles travelling with a modified training axle configuration, and wherein the training data comprises any one or more out of:
- an initial axle configuration of the respective one or more training vehicles,
- a modification performed to the modified training axle configuration of the respective one or more training vehicles,
- a weight of the respective one or more training vehicles,
- a position of the one or more training vehicles,
- one or more vehicle motion parameters of the respective one or more training vehicles.

A technical benefit may include improved accuracy of predicting whether or not there has been a change in the axle configuration, and/or improved accuracy of predicting an updated axle configuration. This is since the trained statistical model may use additional parameters for predicting whether or not there has been a change in the axle configuration and/or which change that has occurred.

Optionally in some examples, including in at least one preferred example, the processing circuitry is configured to predict that there has been a change in a number of axles in the axle configuration when the current estimated weight differs from the previously estimated weight by more than a threshold.

A technical benefit may include improved accuracy of predicting whether or not there has been a change in the axle configuration, and/or improved accuracy of predicting an updated axle configuration. This is since it may be predetermined how much weight changes when an axle is added or removed.

Optionally in some examples, including in at least one preferred example, the processing circuitry is configured to predict that there has been a change in the number of axles in the axle configuration by being configured to predict a quantity of axles that have been added or removed from the axle configuration based on the difference between the previously estimated weight and the current weight of the vehicle.

A technical benefit may include improved accuracy of predicting whether or not there has been a change in the axle configuration, and/or improved accuracy of predicting an updated axle configuration. This is since it may be predetermined how much weight changes when one or two axles are added or removed.

Optionally in some examples, including in at least one preferred example, the vehicle condition data is indicative of a current respective load applied to at least one axle with a respective predefined position of the vehicle. In these examples, the processing circuitry is further configured to obtain a respective previously applied load to the at least one axle. Furthermore, in these examples, the processing circuitry is further configured to predict a type and/or position of an added or removed axle based on a difference between the current respective load applied to the at least one axle and the previously applied load to the at least one axle.

A technical benefit may include improved accuracy of predicting an updated axle configuration of the vehicle and/or improved accuracy of predicting an updated axle configuration.

According to a second aspect of the invention, a vehicle comprising the computer system of the first aspect is provided.

A technical benefit of the second aspect corresponds to the technical benefit of the first aspect.

Examples of the first aspect apply to the second aspect in a corresponding manner, and vice versa.

In some examples, including in at least one preferred example, the vehicle is modified with an added axle.

According to a third aspect, a computer-implemented method for handling an axle configuration of a vehicle is provided. The axle configuration is at least indicative of a number of axles of the vehicle. The method comprises, by a processing circuitry of a computer system, obtaining vehicle condition data indicative of at least one load applied to the vehicle. The method comprises, by the processing circuitry, obtaining the axle configuration of the vehicle. The method comprises, by the processing circuitry, estimating a current weight of the vehicle based on the obtained vehicle condition data and based on the axle configuration of the vehicle. The method comprises, by the processing circuitry, obtaining a previously estimated weight of the vehicle. The method comprises, by the processing circuitry, based on a difference between the previously estimated weight and the current weight of the vehicle, predicting whether there has been a change in the axle configuration of the vehicle.

The third aspect of the invention may seek to improve operability of the vehicle and/or to improve traffic safety.

A technical benefit of the third aspect may correspond to the technical benefits of the first and/or second aspects in a corresponding manner. All examples of the first and/or second aspects apply to and may be combined with the examples of the third aspect and vice versa.

In some examples, including in at least one preferred example, predicting that there has been a change in the axle configuration of the vehicle, further comprises predicting an updated axle configuration of the vehicle.

In some examples, including in at least one preferred example, the method comprises detecting the fulfillment of a triggering condition. In these examples, estimating the current weight of the vehicle and/or to obtaining the vehicle condition data, is performed in response to the fulfilment of the triggering condition. In these examples, the triggering condition comprises any one or more out of:
- the vehicle is detached from a trailer,
- the vehicle has travelled at least a first predefined distance since estimation of the previously estimated weight,
- a time period since estimating the previously estimated weight exceeds a threshold.

In some examples, including in at least one preferred example, the method comprises adapting one or more parameters used for controlling the vehicle based on the updated axle configuration.

In some examples, including in at least one preferred example, the updated axle configuration is indicative of any one or more out of:
- a number of axles added to, or removed from, the axle configuration,
- a type of one or more axles added to, or removed from, the axle configuration,
- a position of one or more axles added to, or removed from, the axle configuration.

In some examples, including in at least one preferred example, predicting the updated axle configuration comprises predicting the updated axle configuration based on a trained statistical model, or based on a predefined heuristic model.

According to a fourth aspect, a computer program product is provided. The computer program product comprises program code for performing, when executed by the processing circuitry, the method of the third aspect.

According to a fifth aspect, a non-transitory computer-readable storage medium is provided. The non-transitory computer-readable storage medium comprises instructions, which when executed by the processing circuitry, cause the processing circuitry to perform the method of the third aspect.

The technical benefits of the fourth and/or the fifth aspect correspond to the technical benefits of the third aspect. Any examples applicable to the third aspect is applicable to the fourth aspect and/or the fifth aspect in a corresponding manner, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary flow chart of a method according to an example.
**FIG. 3A** is an exemplary flow chart of a method according to an example.
**FIG. 3B** is an exemplary flow chart of a method according to an example.
**FIG. 4** is an exemplary flow chart of a method according to an example.
**FIG. 5** is an exemplary flow chart of a method according to an example.
**FIG. 6** is an exemplary flow chart of a method according to an example.
**FIG. 7** is another view of **FIG. 1****,** according to an example.
**FIG. 8** is a flow chart of an exemplary method according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the invention.

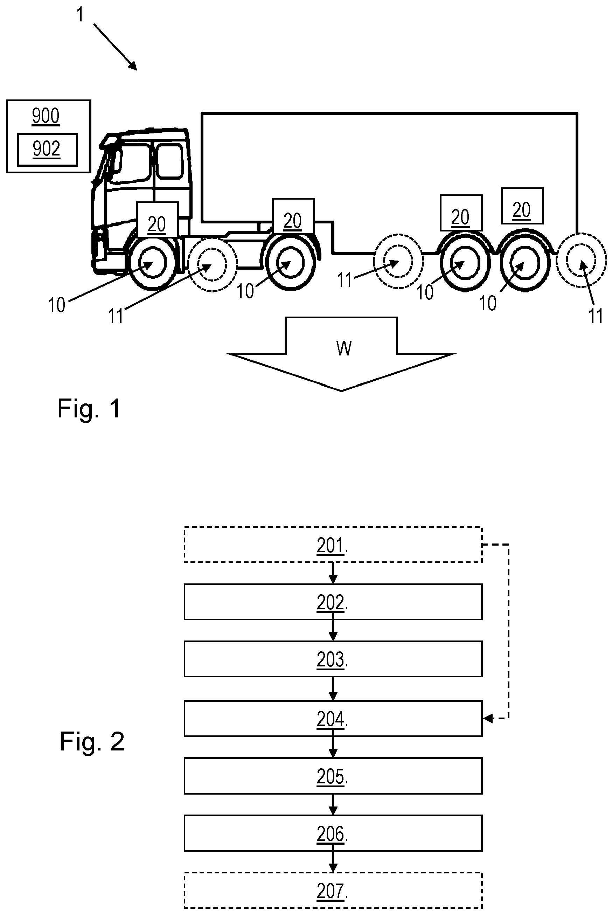

**FIG. 1** illustrates an exemplary **vehicle 1** according to an example. The vehicle may be any suitable vehicle. For example, the vehicle 1 may be any one of a heavy-duty vehicle, such as a truck, semi-truck, tractor, car, bus, or a construction equipment. The vehicle 1 may be any suitable vehicle comprising vehicle axles, e.g., with associated one or more wheels or other ground engaging members. The vehicle 1 may be a vehicle combination which further comprises, and/or is attached to one or more trailers. The vehicle 1 may be able to detach from the one or more trailers.

The vehicle 1 e.g., in an original build such as in an initial state, comprises **at least one axle 10.** Typically, the at least one axle 10 is represented by, e.g., in an original build, at least two axles. The at least one axle 10 may also be represented by, e.g., in an original build, three axles or four axles.

The at least one axle 10 may be associated with an axle configuration. The axle configuration is at least indicative of how many axles are currently indicated to be part of the vehicle 1.

In examples used herein, the axle configuration may be an initial axle configuration of the vehicle 1, i.e., an unmodified axle configuration, meaning that the vehicle 1 comprises the same axles, in the same positions, e.g., as the vehicle 1 were originally produced.

The axle configuration may be indicative of the number of axles of the at least one axle 10.

The axle configuration may be indicative of a position of the axles of the at least one axle 10.

The axle configuration may be indicative of a type of the axles of the at least one axle 10.

The axle configuration may be indicative of a usage status of the axles of the at least one axle 10, e.g., whether or not the axle is currently in use or if it is lifted to not be used by the vehicle 1.

The vehicle 1 may comprise **one or more sensors 20.** The one or more sensors 20 may be used for obtaining vehicle condition data indicative of at least one load applied to the vehicle 1, e.g., at least one load applied to the at least one axle 10, which may be at least one torque applied to one or more or all of the axles and/or wheels of the at least one axle 10.

Additionally or alternatively, the one or more sensors 20 may be used for obtaining vehicle condition data indicative of a motion of the vehicle, e.g., vehicle speed and/or wheel speeds.

The vehicle 1 may be modified such that an axle out of the at least one axle 10 is removed. The removal of the axle is not directly indicated by the axle configuration, and is instead predicted by some examples herein.

The vehicle 1 may be modified such that an axle out of the at least one axle 10 is added. In FIG. 1, this is illustrated by **at least one added axle 11.** The at least one added axle 11 may be added in any suitable position of the vehicle, e.g., in the front or in the rear.

The at least one added axle 11 may comprise a front axle and/or a rear axle.

The at least one added axle 11 may comprise an axle added between any one or more or out of the at least one axle 10.

The at least one added axle 11 may for example comprise one added axle or two added axles.

The at least one added axle 11 may comprise more than two added axles.

The at least one added axle 11 may comprise a steerable or non-steerable axle.

The at least one added axle 11 may comprise a liftable or non-liftable axle.

The at least one added axle 11 may comprise a drive axle, e.g., applicable to supply with a torque.

The at least one added axle 11 may comprise a pusher axle. A pusher axle as used herein may mean an axle positioned, or to be positioned, between a rear axle of the at least one axle 10 and a front axle of the at least one axle 10. A pusher axle may be positioned closer to the front axle than to the rear axle.

The at least one added axle 11 may comprise a tag axle. A tag axle as used herein may mean an axle positioned, or to be positioned, behind a rear axle of the at least one axle 10, e.g., behind being reverse of a forward travel direction of the vehicle 1. In other words, a tax axle may be positioned closer to a rear of the vehicle 1, than an original rear axle of the at least one axle 10.

The removal of the axle is not directly indicated by the axle configuration, and is instead predicted by some examples herein.

In some examples herein, a **current weight W** of the vehicle 1 may be estimated.

The current weight W may be a Combined Gross Vehicle Weight (CGVW) of the vehicle 1 or any other suitable weight metric.

The current weight W may be estimated by use of the one or more sensors to obtain at least one load applied to or by the vehicle 1 to determine the current weight of the vehicle 1, e.g., using any suitable method, wherein some will be described by some examples herein.

The at least one load may be a torque applied to the at least one axle 10, e.g., which may be compared with a vehicle motion to determine the vehicle weight.

The current weight W is estimated with respect to the axle configuration, e.g., with respect to an initial number of axles, and/or a last updated number of axles in the axle configuration.

When an axle is removed or added, the weight/load is distributed to that or other axles leading to a change in current weight.

Hence, examples herein enable to predict whether or not the axle configuration has changed by detecting a change in weight of the vehicle 1.

Embodiments herein may be performed by a **computer system 900** and/or by a **processing circuitry 902 therein.**

The computer system 900 and/or the processing circuitry 902 therein may be a processor and/or an Electronic Control Unit (ECU).

The computer system 900 and/or the processing circuitry 902 therein may be remote units e.g., as part of a cloud service in a server, and/or comprised in the vehicle 1.

The computer system 900 and/or the processing circuitry 902 therein may be communicatively coupled with, and/or able to control, any suitable unit and/or entity of the vehicle 1. For example, the vehicle 1 may comprise a Controller Area Network (CAN), and an associated CAN bus which the computer system 900 and/or the processing circuitry 902 may use in any suitable manner for obtaining any suitable data and/or parameters of examples herein.

Examples and/or embodiments herein relate to estimating a current weight of the vehicle 1. Using the current weight, and a previously estimated weight, examples and/or embodiments herein may comprise predicting whether or not there has been a change in an axle configuration of the vehicle 1, in particular if an axle has been added or removed from the vehicle 1. This is possible since weight estimations may consider a set, e.g., initial, axle configuration when estimating weight, which weight estimation will therefore change if an axle is added or removed. Furthermore, examples and/or embodiments herein may comprise predicting an updated axle configuration. Furthermore, examples and/or embodiments herein may comprise predicting adapting one or more parameters used for controlling the vehicle 1, based on the updated axle configuration.

Below follows examples and/or embodiments that may be combined with the above examples and/or embodiments, in any suitable manner.

**FIG. 2** is an exemplary flow chart of a computer-implemented method for handling an axle configuration of the vehicle 1. The axle configuration is at least indicative of a number of axles of the vehicle 1. The method may comprise the following actions, which actions may be taken in any suitable order. Some actions are optional, which are illustrated as dashed boxes in FIG.2. The method may be performed by the computer system 900 and/or the processing circuitry 902.

### Action 201

In some examples, the method comprises detecting a fulfillment of a triggering condition.

The triggering condition may typically comprise that the vehicle 1 is detached from a trailer. This means that the trailer is not affecting a current weight estimation of the vehicle 1 and/or load applied to the vehicle 1.

Additionally or alternatively, the triggering condition comprises that the vehicle 1 has travelled at least a first predefined distance since estimation of a previously estimated weight.

Additionally or alternatively, the triggering condition comprises that a time period since estimating the previously estimated weight exceeds a threshold.

The previously estimated weight may have been estimated in any suitable manner, e.g., as in action 204.

The triggering condition may be arranged to, when detected to be fulfilled, trigger any one or more out of the following actions: 202-207.

### Action 202

The method comprises obtaining vehicle condition data indicative of at least one load applied to the vehicle 1.

In examples herein, the at least one load applied to the vehicle 1 may additionally or alternatively be at least one load applied by the vehicle 1.

The at least one load applied to the vehicle 1 may be a torque applied to one or more or all wheels and/or axles of the at least one axle 10.

Additionally or alternatively, the at least one load applied to the vehicle 1 may be a torque applied to a driveline of the vehicle 1.

Additionally or alternatively, the at least one load applied to the vehicle 1 may be a torque applied to by a powertrain or motor/engine of the vehicle 1.

Additionally or alternatively, the at least one load may be associated with any force and/or motion applied to, or by the vehicle 1, which can be used to estimate the current weight of the vehicle 1.

In some examples, obtaining the vehicle condition data is performed in response to the fulfilment of the triggering condition.

In some examples, the vehicle condition data comprises any one or more out of:
- at least one load applied to the vehicle 1,
- at least one load applied to the at least one axle 10,
- at least one torque applied to at least one wheel of the at least one axle 10,
- a vehicle motion,
- a vehicle speed,
- a steering wheel angle of the vehicle 1 and/or a wheel angle of wheels of the vehicle 1, and
- wheel speed of one or more wheels of the at least one axle 10.

### Action 203

The method comprises obtaining the axle configuration of the vehicle 1.

The axle configuration may be indicative of the number of axles in an initial axle configuration, i.e., the number of axles of the at least one axle 10.

The axle configuration may further be indicative of where any one or more axles out of the at least one axle 10 are positioned, relative to each other, and/or in absolute positions.

The axle configuration may further be indicative of any suitable parameter, e.g., as discussed with respect to FIG. 1.

### Action 204

The method comprises estimating a current weight W of the vehicle 1 based on the obtained vehicle condition data and based on the axle configuration of the vehicle 1.

In some examples, estimating the current weight W of the vehicle 1 is performed in response to the fulfilment of the triggering condition.

Estimating the current weight W may be performed in any suitable manner based on the obtained vehicle condition data and based on the axle configuration of the vehicle 1.

Many different methods may be used for estimating the weight of a vehicle. In particular examples herein, the current weight W of the vehicle 1 may be estimated based on a torque applied to the at least one axle 10, and based on an obtained vehicle motion, e.g., as part of the vehicle condition data, e.g., any one or more out of a vehicle motion, vehicle speed, wheel speeds, steering wheel angle. The vehicle motion obtained by the applied torque has a direct correlation to the weight of the vehicle. This is since a given torque will propel the vehicle 1 of a certain weight in a certain vehicle motion, e.g., speed, due to laws of mechanics, and when the vehicle motion, e.g., vehicle or wheel speed, and the torque applied is known, the weight can be determined.

In other words, since Torque applied to the at least one axle 10, and the resultant vehicle motion, e.g., as in the vehicle condition data, is dependent on the mass of the vehicle 1, the weight w can be determined, e.g., based on heuristics or any predefined model.

The applied torque and vehicle motion may be obtained by any suitable sensors and/or estimations, e.g., as in the vehicle condition data, and therefore, the unknown mass, i.e., the weight W, will be identified.

Further vehicle parameters may be used to estimate the weight w of the vehicle with improved accuracy, e.g., friction of a travelled road of the vehicle 1, tire models, etc.

Estimating the current weight W of the vehicle 1 may in some examples further comprise estimating a weight associated with all axles controllable by the vehicle, e.g., the at least one axle 10. The weight of each respective axle may be estimated based on a respective applied torque to the respective axle and based on a respective wheel speed of at least one wheel of the respective axle.

### Action 205

The method comprises obtaining a previously estimated weight of the vehicle 1.

The previously estimated weight of the vehicle 1 may have been estimated, e.g., as in action 204 and stored in a temporary storage, e.g., in a memory and/or database and/or data storage and/or storage medium of the computer system 900, e.g., a storage device 914. The previously estimated weight may be obtained from said temporary storage.

The previously estimated weight of the vehicle 1 may have been obtained during a previous key cycle event, e.g., when the vehicle 1 is turned on.

The current estimated weight of the vehicle 1 may subsequently replace the previously estimated weight for future predictions.

### Action 206

The method comprises predicting whether there has been a change in the axle configuration of the vehicle 1.

In some examples, predicting whether there has been a change in the axle configuration of the vehicle 1 comprises determining whether there has been a change in the axle configuration of the vehicle 1.

In some examples, predicting whether there has been a change in the axle configuration of the vehicle 1 comprises predicting or determining that there has been a change in the axle configuration of the vehicle 1.

In some examples, predicting whether there has been a change in the axle configuration of the vehicle 1 is based on a difference between the previously estimated weight and the current weight W of the vehicle 1.

In other words, when the difference between the previously estimated weight and the current weight W of the vehicle 1 is too great, it may be predicted that an axle is added or removed.

When the current estimated weight W is greater than the previously estimated weight, it may be predicted that an axle has been added from the vehicle 1.

When the current estimated weight W is less than the previously estimated weight, it may be predicted that an axle has been removed from the vehicle 1.

In some examples, predicting that there has been a change in the axle configuration of the vehicle 1, further comprises predicting an updated axle configuration of the vehicle 1.

In some examples, predicting the updated axle configuration may comprise predicting how many axles have been added or removed to the axle configuration.

In some examples, predicting the updated axle configuration may comprise predicting a position of an added axle.

In some examples, predicting the updated axle configuration may comprise determining the updated axle configuration.

In some examples, predicting the updated axle configuration may be based on a current estimated axle load of one or more axle load of the at least one axle 10 compared with a previously estimated axle load of the respective axles. Based on how the axle loads change, a position of axle may be determined, e.g., relative to other axles of the at least one axle 10. When an axle is added, due to predefined distance parameters of distances between axles and/or regional requirements and/or physical limitations, it may further be possible to estimate an absolute position of the at least one added axle 11, e.g., as part of predicting the updated axle configuration.

In some examples, the updated axle configuration is indicative of any one or more out of:
- a number of axles added to, or removed from, the axle configuration,
- a type of one or more axles added to, or removed from, the axle configuration,
- a position of one or more axles added to, or removed from, the axle configuration.

In some examples, predicting whether there has been a change in the axle configuration of the vehicle 1 comprises predicting that there has been a change in a number of axles in the axle configuration when the current estimated weight differs from the previously estimated weight by more than a threshold, e.g., 800 kilograms.

In some examples, predicting whether there has been a change in the axle configuration of the vehicle 1 comprises predicting that there has been a change in the number of axles in the axle configuration by predicting that a quantity of axles that have been added or removed from the axle configuration based on the difference between the previously estimated weight and the current weight W of the vehicle 1. In other words, if the weight between the current weight and the previously estimated weight differs by more than a second threshold, e.g., 1600 kilograms, then two axles may be removed or added from the vehicle 1.

In some examples, the updated axle configuration is predicted based on a trained statistical model, or based on a predefined heuristic model.

In some examples, the trained statistical model is trained based on training data of one or more training vehicles travelling with a modified training axle configuration. The one or more training vehicles may or may not comprise the vehicle 1. The one or more training vehicles may or may not comprise simulated vehicles. The one or more training vehicles may comprise at least one vehicle with a same initial axle configuration, i.e., number and position of axles built from production, as an initial axle configuration of the vehicle 1.

In some examples, the training data comprises any one or more out of:
- an initial axle configuration of the respective one or more training vehicles, e.g., the number of axles and/or the position of the axles,
- a modification performed to the modified training axle configuration of the respective one or more training vehicles,
- an initial and/or estimated weight of the respective one or more training vehicles,
- a position of the one or more training vehicles, e.g., a Global Positioning System (GPS) or Global navigation satellite system (GNSS) position,
- one or more vehicle motion parameters of the respective one or more training vehicles.

Since different jurisdictions have different legal requirements and/or need of which modifications to perform to the axle configuration, the position of the one or more training vehicles as part of the training data have been indicated to be a distinguishing factor in training the trained statistical model with a high increase in accuracy when used.

Predicting the updated axle configuration may therefore comprise inputting one or more input parameters as inference to the trained statistical mode. The one or more input parameters may correspond to the training data.

The one or more input parameters may for example comprise any one or more out of:
- an initial and/or current axle configuration of the vehicle 1,
- an initial and/or estimated weight of the vehicle 1,
- a position, e.g., GPS or GNSS position, of the vehicle 1, and
- one or more vehicle motion parameters of the vehicle 1.

In some examples, the one or more input parameters may at least partly be obtained from the set of sensors 20, or derived from sensor data thereof.

Predicting whether there has been a change in the axle configuration of the vehicle 1 and/or predicting the updated axle configuration may comprise estimating a confidence value of the prediction(s).

### Action 207

In some examples, the method comprises adapting one or more parameters used for controlling the vehicle 1 based on the updated axle configuration. The one or more parameter may be parameters for controlling a motion of the vehicle 1 and/or related to dynamic of the vehicle 1. The one or more parameters may be one or more brake parameters.

Additionally or alternatively, the one or more parameters may relate to any one or more out of:
- One or more advance driver assistance parameters for the vehicle 1,
- one or more suspension parameters, e.g., for electronically controlled suspension of the vehicle 1,
- one or more brake system parameters of the vehicle 1,
- one or more steering parameters, e.g., for a steering system such as for defining a turning radius of the vehicle 1.

In some examples, adapting the one or more parameters is based on the confidence value of the prediction(s) of action 206.

In some examples, adapting the one or more parameters is performed in response to detecting that the confidence value of the prediction(s) of action 206 is above a threshold.

### AI based model and Physics based model

Examples herein, e.g., Actions 201-207 above, may be performed by a physics based model, e.g., based on the predefined heuristic model and/or based on an Artificial Intelligence (AI) model using the trained statistical model, which will be further exemplified below.

### AI Model

The AI model may comprise any example and/or embodiment using the trained statistical model, e.g., for predicting whether or not there has been a change in the axle configurations and/or in predicting the updated axle configuration. The AI model may be performed as part of the method actions 201-207 above.

The trained statistical model may be used to predict whether there has been a change in the axle configuration of the vehicle 1, e.g., if an axle has been added or removed, and if so, optionally their relative and/or absolute position.

The trained statistical model may be used in conjunction with the physics based model, e.g., for predicting any suitable parameter of the physics based model.

In some examples, the AI model utilizes training and/or input data of vehicles, e.g., the vehicle 1, and/or from training vehicles to train the trained statistical model on parameters for different axle configurations.

The trained statistical model may comprise a neural network model. The neural network model may be produced using any suitable programming language or environment. The neural network model may comprise a neural network trained with the training data discussed above with respect to action 206.

In some examples, it has been particularly noted that, surprisingly, using the training data, a cluster of data and trend such as if the truck is in a particular region, the retrofits, i.e. initial axle configurations are usually a 6x4 truck to a 10x4 truck , with 2 additional added pusher axles. This type of data driven confidence cannot be obtained via physics based models. Hence, the trained statistical model may be used in addition to any other example herein to improve prediction accuracy.

The training of the trained statistical model may be an on-going process where the training links physics signals to known retrofits, e.g., based on dealer information to assist trucks which are not retrofitted by a dealer.

The trained statistical model may comprise any one or more out of: fine tree, gaussian Vector, ensemble bagged trees, support vector machines, deep neural network using a Levernberg-Marquardt method and/or Bayesian regularization and/or scaled conjugate method with different number of hidden layers and neurons. The number of hidden layers and neurons may be decided and/or configured based on training and testing performance of the trained statistical model.

For example, additional hidden layers may need to be added if the accuracy is below a threshold.

### Physics based model

The physics based model may use heuristics, e.g., predefined heuristic model, for estimating the weight of the vehicle, and then to predict whether or not there has been a change in the number of axles of the vehicle 1, e.g., as in actions 201-207.

The physics based model may comprise concepts of having multiple flags and/or parameters work in parallel to predict the axle configuration and/or change thereof.

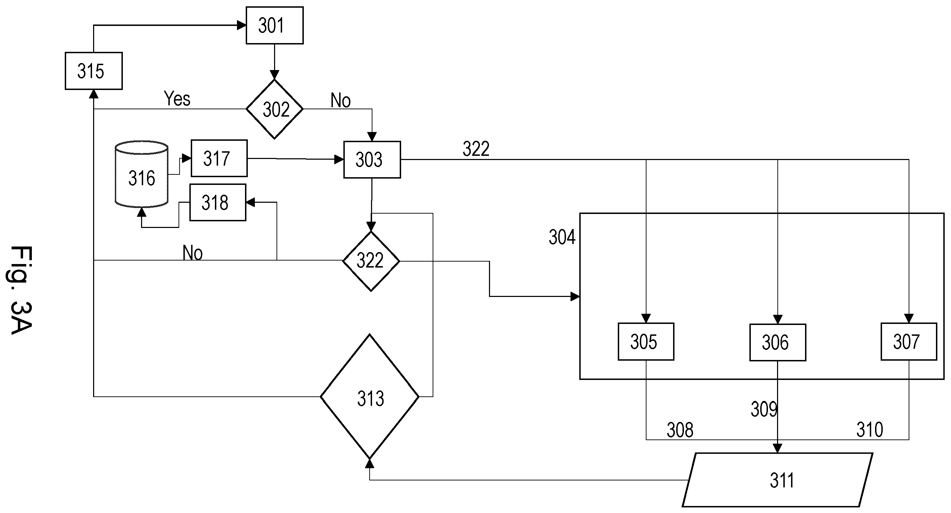

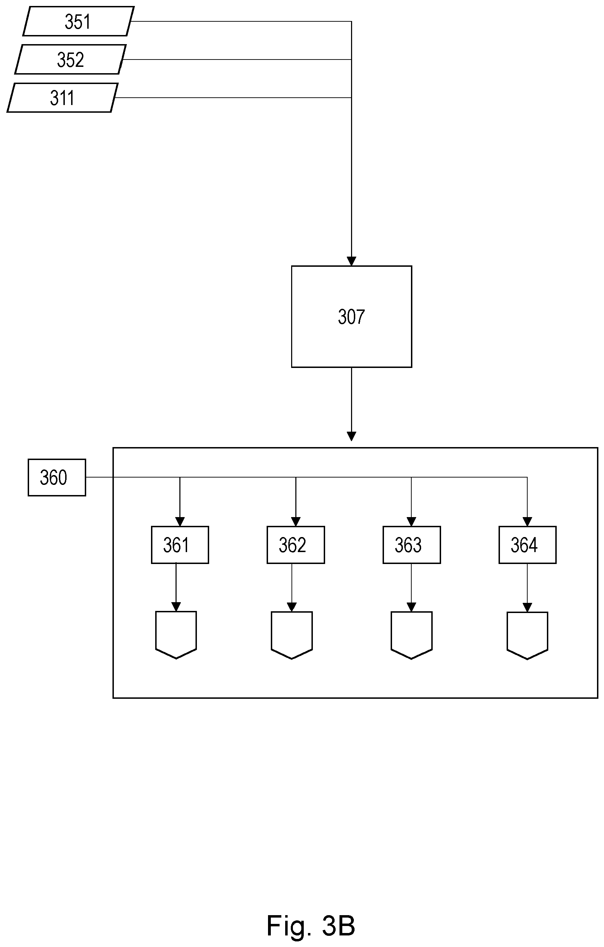

The flow diagrams of **FIGS. 3-6** may illustrate a method performing the physics based model. The flow diagrams of FIGS. 3-6 may however also in some examples be part of the AI based model.

The actions of the flow chart exemplified in FIGS. 3-6 are respectively applicable to be combined with any one or more out of the actions in the flow chart of FIG. 2, and vice versa. The respective methods of FIGS. 3-6 may be performed by the computer system 900 and/or the processing circuitry 902, e.g., as part of the method of any one or more out of actions 201-207 above.

**FIG. 3A** is an exemplary flow chart of a method according to an example. The method of FIG. 3A may relate to detect a triggered **weight flag 311,** e.g., a GCVW flag. The prediction(s) of action 206 may be based on the triggered weight flag 311.

The weight flag 311 may be triggered when a previously estimated weight is different from a current estimated weight by more than a threshold.

The weight flag 311 may indicate that there has been a change in the axle configuration.

The monitoring starts at a **start time 301,** usually at a key cycle event. A key cycle event, or also referred to as a key cycle is when a key is used to turn on the vehicle 1. A key cycle event may also be referred to as an ignition cycle event.

If a trailer is connected to the vehicle 1 then we wait until a next initiation of this function, e.g., next key cycle and/or periodic monitor, or event such as, a trailer is removed/detached, e.g., as part of the trigger condition in action 201.

If the trailer is not connected, then a current weight is obtained, e.g., as in action 204, a previously estimated weight is **obtained 317** from a **memory 316,** e.g., as in action 205.

A weight **difference 322** between key cycles, is obtained by **comparing 303** the previously estimated weight and the current estimated weight . The current key cycle may be **stored 318** as well to the memory 316, in particular if a **difference 322** indicates that the weight difference 322 is higher than a first threshold, e.g., a 5% increase in weight over the stored previously estimated weight.

If the difference 322 exceeds the first threshold, e.g., X% as configurable value, a change in axle configuration is likely, e.g., as part of predictions in action 206, and the methods herein may comprise assigning a confidence factor based on difference percentages as follows.

If the difference 322 exceeds the first threshold, then a **confidence function 304** may be used for determining a confidence of weight difference between the current and previously estimated weight. If the difference is between a first interval, e.g., 5-10%, a **first confidence function 305** may **transmit 308** a first confidence, e.g., 50%. If the difference is between a second interval, e.g., 10-20%, a **second confidence function 306** may **transmit 309** a second confidence, e.g., 75%. If the difference is above a third threshold, e.g., 20%, a **third confidence function 307** may **transmit 309** a third confidence, e.g., 95%.

In other words, with increased weight difference, the prediction accuracy and confidence is increased.

The prediction of actions 206 may further be able to indicate said confidence.

Based on any of the transmissions 308, 309, 310, the weight flag 311 may be triggered. The weight flag 311 may indicate a confidence factor based on the first, second or third confidence.

Using the confidence factor, in some examples, methods herein may **accumulate mileage 313** to confidently predict whether there has been a change to the axle configuration. If the confidence factor stays above a threshold for a set mileage, e.g., while **repeating 315** the procedure of FIG. 3, it may be predicted that the axle configuration has changed, e.g., that an axle has been added or removed, e.g., as in action 206.

**FIG. 3B** is an exemplary flow chart of a method according to an example.

The method of FIG. 3B may be an extension of the method of FIG. 3A, and may relate to examples when an axle is added or removed to the vehicle 1, e.g., as indicated by the weight flag 311. In these examples, other existing axles, e.g., the at least one axle 10 may experience that a load in bob-tail, e.g., the rear of the vehicle 1, would be decreased or increased respectively.

For individual axles out of the at least one axle 10, a current respective load may be estimated. The current respective load may be a weight of the respective axle, or a weight applied to the respective axle. Based on the respective loads, for each respective axle, the loads may be compared with respective previously estimated loads. For each axle in the vehicle 1, based on the difference between the respective previously estimated load and the respective current estimated load, a confidence of that the axle configuration has been changed may be determined. When the difference is high e.g., above a respective axle load threshold, a high confidence is determined, e.g., 75%.

For any one or more out of the axles, the current respective load may be estimated based on a torque applied to the respective axle, and based on a current measured wheel speed of a wheel of the respective axle.

In examples herein a **steering axle confidence 351** that the axle configuration has changed, a **drive axle confidence 352** that the axle configuration has changed, and the confidence associated with the weighted flag 311 of FIG. 3A, may enable to predict whether the axle configurations has changed and/or predict the updated axle configuration, as in action 206, only when the weighted average of confidences 351, 352, and the confidence associated with the weighted flag 311, is above a threshold. In some examples, an **axle configuration 360** is obtained as a current or initial axle configuration out of **axle configurations 361, 362, 363, 364** of the vehicle 1. The axle configuration 360 may be e.g., preconfigured or previously stored with the axle configurations 361, 362, 363, 364, e.g., 4x2, 6x2, 6x4, 8x4, indicating number of wheels and number of driven wheels in an axle configuration, and assuming that each axle has two wheels each.

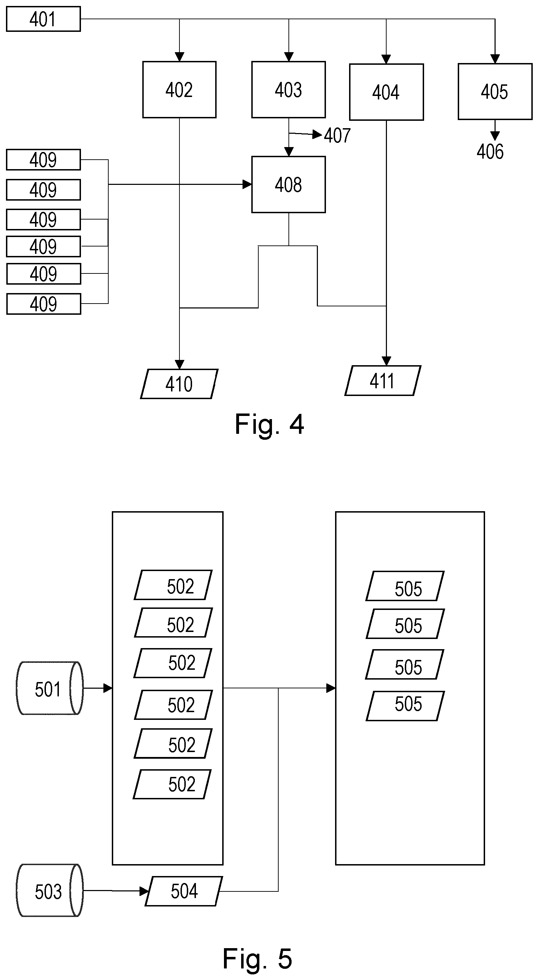

The axle configuration 360 has been modified, e.g., an axle has been added, and FIGS 4-6 further explains how to establish a quantity, type, and/or position of the added axles.

**FIG. 4** is an exemplary flow chart of a method according to an example.

Based on a **weight difference 401** of the vehicle 1, e.g., the difference between the current weight estimated in action 204 and the previously estimated weight as obtained in action 205, it may be predicted e.g., as part of action 206, how many axles have been added to the axle configuration, e.g., 1 or 2.

When **estimating 402** that the weight difference below a first threshold, e.g., less than 800 kilograms, it may be predicted that one axle has been added or removed from the axle configuration.

When **estimating 403** that the weight difference is above the first threshold and below a second threshold, e.g., between 800 kilograms to 1600 kilograms, it may be predicted 410, 411 that one or two axles have been added or removed from the axle configuration and/or a customizable function 408 may be triggered. The customizable function 408 may be an alert or a fault report due to that it may not be possible to accurately predict the number of axles. The prediction may be based on obtained **vehicle condition data 409,** e.g., as obtained in action 202, and/or based on a preconfigured behavior. The vehicle condition data 409 may in these examples be indicative of any one or more out of: a change in load of a drive axle of the vehicle 1, a wheelbase of the vehicle, a body type of the vehicle 1, a position of the vehicle 1, a current weight of the vehicle 1, the axle configuration.

When **estimating 404** that the weight difference is above the second threshold and below a third threshold, e.g., more than 1600 kilograms, it may be **predicted 411** that two axles have been added or removed from the axle configuration.

When **estimating 405** that the weight difference is above the third threshold e.g., 2500 kilograms, an alert, e.g., a fault report, may be **triggered 406** as it may not be possible to estimate more than two axles added/removed at a time.

**FIG. 5** is an exemplary flow chart of a method according to an example. Further examples, e.g., as part of the method of actions 201-207 may predict a position of added axles. Before enabling such a functionality, parameters of the updated axle configuration may need to be constrained to improve accuracy of predictions, e.g., as in action 206. From a **data storage 501,** one or more **vehicle parameters 502** are obtained. The one or more vehicle parameters may comprise any one or more out of: a Front Axle Position (FAP) of a front axle e.g., of the at least one axle 10, a Rear Axle Position (RAP) e.g., of the at least one axle 10, a Front Brake Chamber Size (FBCS), a Rear Brake Chamber Size (RBCS), a vehicle type, and a body type.

The brake chambers may be defined for load capacity which means that a higher the chamber size indicates, e.g., to the trained statistical model, that an axle is added or will be added.

Based on a **position 503** of the vehicle 1, **regional requirements 504** for the vehicle 1 and/or the axle configuration may be obtained.

Based on the regional requirements 504 and/or the one or more vehicle parameters 502, **constraints 505** may be obtained. The constraints 505 may be indicative of any one or more out of:
- a maximum and/or minimum percentage of a type of axle, e.g., rear pusher and/or front pusher axles,
- a maximum number of axles,
- a maximum number of tag axles, and
- a smallest distance between axles.

Action 206 may comprise predicting the updated axle configuration based on the constraints 505.

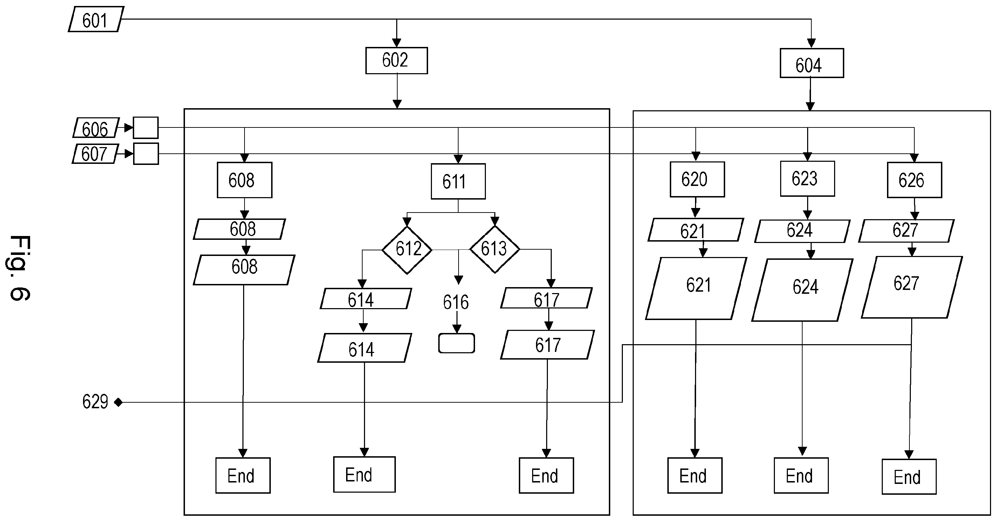

**FIG. 6** is an exemplary flow chart of a method according to an example.

Based on the obtained data of FIG. 4, it may be possible to determine a position and/or type of added axles to the axle configuration of the vehicle 1.

Based on a change in loads of each axle out of the at least one axle 10, here denoted as **change in steering axle load 606,** and **change in drive axle load 607,** it is possible to determine a type and/or position of the at least one added axle 11, e.g., as part of the prediction of the updated axle configuration in action 206. The axle load changes 606, 607, may be changed with respect to a respective current axle load compared with a respective previously estimated axle load. While only two axles are considered in the Example of FIG. 6, a similar approach applies to any number of axles in an initial axle configuration, as the load on each axle may indicate an estimate of between which axles a newly added axle is positioned.

The steering axle may in these examples be a front axle, and the drive axle may be a rear axle.

If the at least one axle 10 has more than two initial/current axles, changes in these axle loads may further be used to determine type and/or position of added axles, i.e., the at least one added axle 11.

When a number of added axles of the at least one added axle 11, **represented by a quantity input parameter 601,** is one, a **first function 602** is used for determining the type and/or position of the at least one added axle 11. When the number of added axles of the at least one added axle 11 is two, a **second function 604** is used for determining the type and/or position of the at least one added axle 11.

In some examples, when using the first function 602, and when determining 608 that the change in steering axle load 606 is greater than the change in drive axle load 606, predicting the updated axle configuration may comprise determining that the at least one added axle 11 is a front pusher axle, and has an estimated position based on a position of the steering axle and the drive axle. The estimated position may be determined as a set distance in front of the steering axle in a forward direction of the vehicle 1, based on a distance between the steering axle and the drive axle.

In some examples, when using the first function 602, and when **determining 611** that the change in steering axle load 606 is less than (or equal) to the change in drive axle load 606, and when **determining 612** that the change in steering axle load 606 is less than a threshold and that the position of the drive axle is within a set first interval of the vehicle 1, **determining 614,** that the at least one added axle 11 is a tag axle and has an estimated position based on a position of the steering axle and the drive axle. The estimated position may be determined as a set distance behind drive axle in a reverse direction of the vehicle 1, based on a distance between the steering axle and the drive axle.

In some examples, when using the first function 602, and when **determining 611** that the change in steering axle load 606 is less than (or equal to) the change in drive axle load 606, and when **determining 613** that the change in drive axle load 607 is less than a threshold and that the position of the drive axle is within a set second interval of the vehicle 1, **determining 617,** that the at least one added axle 11 is a pusher axle and has an estimated position based on a position of the steering axle and the drive axle, i.e. between the drive axle and steering axle. The estimated position may be determined as a predetermined position between the axles.

When not being able to determine the type and/or position of the at least one axle 11, **triggering 616** an alert and/or fault report. The alert and/or fault report may indicate to a driver that an axle configuration may have been changed, i.e., an axle has been added, but it is not possible to determine type and/or position of the axle.

In some examples, when using the second function 604, and when **determining 620** that the change in steering axle load 606 is above a steering load threshold, and the change in drive axle load 606 is above a drive load threshold, and that the position of the drive axle is within a set third interval of the vehicle 1, **determining 621,** that the at least one added axle 11 comprises two pusher axles with estimated positions based on a position of the steering axle and the drive axle. The estimated positions may be respectively determined as respective set distances in front of the steering axle in a forward direction of the vehicle 1, based on a distance between the steering axle and the drive axle.

In some examples, when using the second function 604, and when **determining 623** that a difference between the change in steering axle load 606 and the change in drive axle load 606 is within a set interval, **determining 624,** that the at least one added axle 11 comprises one pusher axle and one tag axle with estimated positions based on a position of the steering axle and the drive axle. The pusher axle may be determined with a predetermined position between the steering axle and the drive axle and the tag axle may be determined as a set distance behind drive axle in a reverse direction of the vehicle 1, based on a distance between the steering axle and the drive axle.

In some examples, when using the second function 604, and when **determining 626** that a difference between the change in steering axle load 606 and the change in drive axle load 606 is above respective thresholds and that the position of the drive axle is within a set fourth interval of the vehicle 1, **determining 627,** that the at least one added axle 11 comprises two tag axles with estimated positions based on a position of the steering axle and the drive axle. The tag axles may be determined respectively with respective set distances behind the drive axle in a reverse direction of the vehicle 1, based on a distance between the steering axle and the drive axle.

The predicted updated axle configuration, e.g., as in action 206, may be stored on a block chain on updating the entire configuration, e.g., as in action 207, e.g., from 4x2 to 8x2 if two axles were added, and stored until a next axle configuration change for the vehicle 1. The updated axle configuration may replace an initial axle configuration for any further measurements according to embodiments herein.

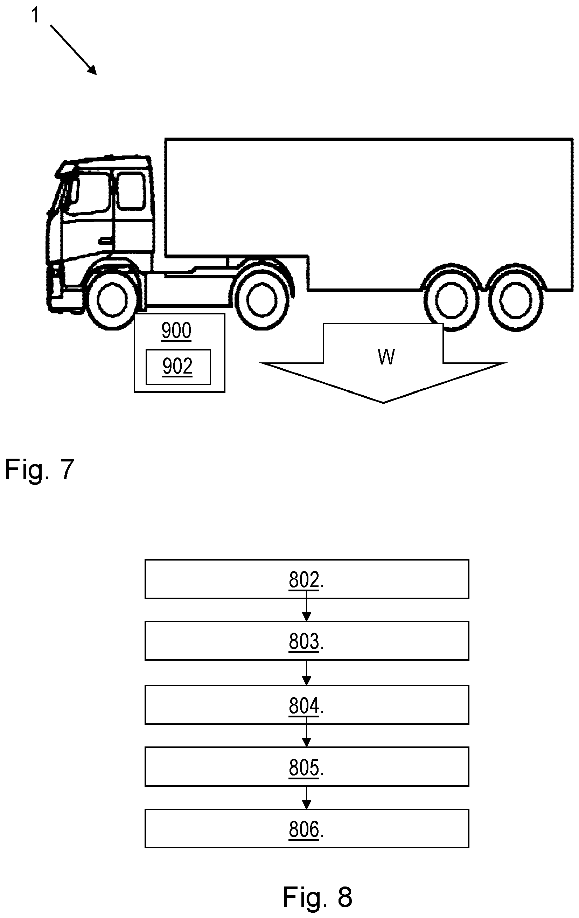

**FIG. 7** is another view of **FIG. 1****,** according to an example. The computer system 900 comprises processing circuitry 902 which is configured to handle an axle configuration of the vehicle 1. The axle configuration is at least indicative of a number of axles of the vehicle 1.

The processing circuitry 902 is configured to obtain vehicle condition data indicative of at least one load applied to the vehicle 1. The processing circuitry 902 is configured to obtain the axle configuration of the vehicle 1. The processing circuitry 902 is configured to estimate a current weight W of the vehicle 1 based on the obtained vehicle condition data and based on the axle configuration of the vehicle 1. The processing circuitry 902 is configured to obtain a previously estimated weight of the vehicle 1. The processing circuitry 902 is configured to, based on a difference between the previously estimated weight and the current weight W of the vehicle 1, predict whether there has been a change in the axle configuration of the vehicle 1.

**FIG. 8** is a flow chart of a computer-implemented method for handling an axle configuration of the vehicle 1. The axle configuration is at least indicative of a number of axles of the vehicle 1. The method comprises actions 802-806 below. Actions 802-806 corresponds to actions 202-206 above. Actions 802-806 are combinable with actions 201-207 above, in any suitable manner.

**Action 802.** The method comprises: by the processing circuitry 902 of the computer system 900, obtaining vehicle condition data indicative of at least one load applied to the vehicle 1.

**Action 803.** The method comprises: by the processing circuitry 902, obtaining the axle configuration of the vehicle 1.

**Action 804.** The method comprises: by the processing circuitry 902, estimating a current weight W of the vehicle 1 based on the obtained vehicle condition data and based on the axle configuration of the vehicle 1.

**Action 805.** By the processing circuitry 902, obtaining a previously estimated weight of the vehicle 1.

**Action 806.** By the processing circuitry 902, based on a difference between the previously estimated weight and the current weight W of the vehicle 1, predicting whether there has been a change in the axle configuration of the vehicle 1.

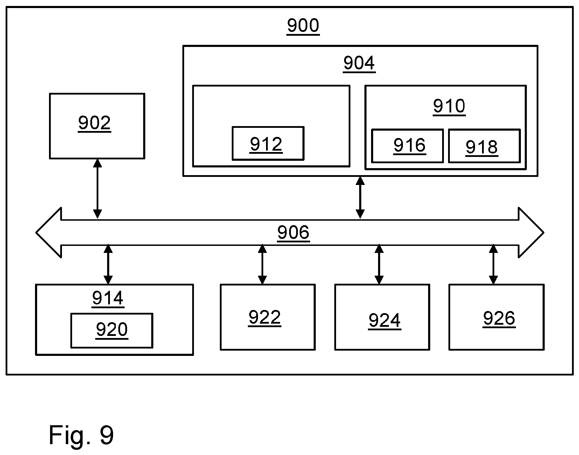

**FIG. 9** is a schematic diagram of the computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN, an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the invention and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include the processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the invention. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

## Claims

1. A computer system (900) comprising processing circuitry (902) configured to handle an axle configuration of a vehicle (1), the axle configuration being at least indicative of a number of axles of the vehicle (1), the processing circuitry (902) further being configured to:
- obtain vehicle condition data indicative of at least one load applied to the vehicle (1),
- obtain the axle configuration of the vehicle (1),
- estimate a current weight (W) of the vehicle (1) based on the obtained vehicle condition data and based on the axle configuration of the vehicle (1),
- obtain a previously estimated weight of the vehicle (1);
the computer system (900) being **characterized in that** the processing circuitry is configured to:
- based on a difference between the previously estimated weight and the current weight (W) of the vehicle (1), predict whether there has been a change in the axle configuration of the vehicle (1).

2. The computer system (900) of claim 1, wherein when predicting that there has been a change in the axle configuration of the vehicle (1), the processing circuitry (902) is further configured to, based on the difference between the previously estimated weight and the current weight (W) of the vehicle (1), predict an updated axle configuration of the vehicle (1).

3. The computer system (900) of any of claims 1-2, wherein the processing circuitry (902) is further configured to detect the fulfillment of a triggering condition, and wherein the processing circuitry (902) is configured to estimate the current weight (W) of the vehicle (1) and/or to obtain the vehicle condition data in response to the fulfilment of the triggering condition, wherein the triggering condition comprises any one or more out of:
- the vehicle (1) is detached from a trailer,
- the vehicle (1) has travelled at least a first predefined distance since estimation of the previously estimated weight,
- a time period since estimating the previously estimated weight exceeds a threshold.

4. The computer system (900) of any of claims 2-3, wherein the processing circuitry (902) is further configured to, adapt one or more parameters used for controlling the vehicle (1) based on the updated axle configuration.

5. The computer system (900) of any of claims 2-4, wherein the updated axle configuration is indicative of any one or more out of:
- a number of axles added to, or removed from, the axle configuration,
- a type of one or more axles added to, or removed from, the axle configuration,
- a position of one or more axles added to, or removed from, the axle configuration.

6. The computer system (900) of any of claims 2-5, wherein the processing circuitry (902) is further configured to predict the updated axle configuration based on a trained statistical model, or based on a predefined heuristic model.

7. The computer system (900) of claim 6, wherein the trained statistical model is trained based on training data of one or more training vehicles travelling with a modified training axle configuration, and wherein the training data comprises any one or more out of:
- an initial axle configuration of the respective one or more training vehicles,
- a modification performed to the modified training axle configuration of the respective one or more training vehicles,
- a weight of the respective one or more training vehicles,
- a position of the one or more training vehicles,
- one or more vehicle motion parameters of the respective one or more training vehicles.

8. The computer system (900) of any of claims 1-7, wherein the processing circuitry (902) is configured to predict that there has been a change in a number of axles in the axle configuration when the current estimated weight differs from the previously estimated weight by more than a threshold.

9. The computer system (900) of claim 8, wherein the processing circuitry (902) is configured to predict that there has been a change in the number of axles in the axle configuration by being configured to predict a quantity of axles that have been added or removed from the axle configuration based on the difference between the previously estimated weight and the current weight (W) of the vehicle (1).

10. The computer system (900) of claim 9, wherein the vehicle condition data is indicative of a current respective load applied to at least one axle (10) with a respective predefined position of the vehicle (1), and wherein the processing circuitry (902) is further configured to obtain a respective previously applied load to the at least one axle (10), and wherein the processing circuitry (902) is further configured to predict a type and/or position of an added or removed axle based on a difference between the current respective load applied to the at least one axle (10) and the previously applied load to the at least one axle (10).

11. A vehicle (1) comprising the computer system (900) of any of claims 1-10.

12. The vehicle (1) according to claim 11, wherein the vehicle (1) is modified with an added axle (11).

13. A computer-implemented method for handling an axle configuration of a vehicle (1), the axle configuration being at least indicative of a number of axles of the vehicle (1), the method comprising:
- by a processing circuitry (902) of a computer system (900), obtaining (202, 802) vehicle condition data indicative of at least one load applied to the vehicle (1),
- by the processing circuitry (902), obtaining (203, 803) the axle configuration of the vehicle (1),
- by the processing circuitry (902), estimating (204, 804) a current weight (W) of the vehicle (1) based on the obtained vehicle condition data and based on the axle configuration of the vehicle (1),
- by the processing circuitry (902), obtaining (205, 805) a previously estimated weight of the vehicle (1);
the method being **characterized in** comprising:
- by the processing circuitry (902), based on a difference between the previously estimated weight and the current weight (W) of the vehicle (1), predicting (206, 806) whether there has been a change in the axle configuration of the vehicle (1).

14. A computer program product comprising program code for performing, when executed by the processing circuitry (902), the method of claim 13.

15. A non-transitory computer-readable storage medium comprising instructions, which when executed by the processing circuitry (902), cause the processing circuitry (902) to perform the method of claim 13.

## Patentansprüche

1. Computersystem (900), das einen Verarbeitungsschaltkreis (902) umfasst, der dazu konfiguriert ist, eine Achsenkonfiguration eines Fahrzeugs (1) zu handhaben, wobei die Achskonfiguration mindestens angebend für eine Anzahl von Achsen des Fahrzeugs (1) ist, wobei der Verarbeitungsschaltkreis (902) ferner konfiguriert ist, um:
- Fahrzeugzustandsdaten zu erhalten, die mindestens angebend für eine auf das Fahrzeug (1) angewendete Last sind,
- die Achskonfiguration des Fahrzeugs (1) zu erhalten,
- ein aktuelles Gewicht (W) des Fahrzeugs (1) basierend auf den erhaltenen Fahrzeugzustandsdaten und basierend auf der Achskonfiguration des Fahrzeugs (1) zu schätzen,
- ein zuvor geschätztes Gewicht des Fahrzeugs (1) zu erhalten;
wobei das Computersystem (900) **dadurch gekennzeichnet ist, dass** der Verarbeitungsschaltkreis konfiguriert ist, um:
- basierend auf einer Differenz zwischen dem zuvor geschätzten Gewicht und dem aktuellen Gewicht (W) des Fahrzeugs (1), vorherzusagen, ob eine Änderung der Achskonfiguration des Fahrzeugs (1) stattgefunden hat.

2. Computersystem (900) nach Anspruch 1, wobei, wenn vorhergesagt wird, dass eine Änderung der Achskonfiguration des Fahrzeugs (1) stattgefunden hat, der Verarbeitungsschaltkreis (902) ferner konfiguriert ist, um basierend auf der Differenz zwischen dem zuvor geschätzten Gewicht und dem aktuellen Gewicht (W) des Fahrzeugs (1) eine aktualisierte Achskonfiguration des Fahrzeugs (1) vorherzusagen.

3. Computersystem (900) nach einem der Ansprüche 1 bis 2, wobei der Verarbeitungsschaltkreis (902) ferner konfiguriert ist, um die Erfüllung einer Auslösebedingung zu detektieren, und wobei der Verarbeitungsschaltkreis (902) konfiguriert ist, um das aktuelle Gewicht (W) des Fahrzeugs (1) zu schätzen und/oder die Fahrzeugzustandsdaten als Antwort auf die Erfüllung der Auslösebedingung zu erhalten, wobei die Auslösebedingung eines oder mehrere aus Folgendem umfasst:
- das Fahrzeug (1) ist von einem Anhänger gelöst,
- das Fahrzeug (1) ist seit der Schätzung des zuvor geschätzten Gewichts mindestens eine erste vordefinierte Strecke gefahren,
- eine Zeitspanne seit der Schätzung des zuvor geschätzten Gewichts überschreitet einen Schwellenwert.

4. Computersystem (900) nach einem der Ansprüche 2 bis 3, wobei der Verarbeitungsschaltkreis (902) ferner konfiguriert ist, um einen oder mehrere zur Steuerung des Fahrzeugs (1) verwendete Parameter basierend auf der aktualisierten Achskonfiguration anzupassen.

5. Computersystem (900) nach einem der Ansprüche 2 bis 4, wobei die aktualisierte Achskonfiguration angebend für eines oder mehrere aus Folgendem ist:
- eine Anzahl von Achsen, die zu der Achskonfiguration hinzugefügt oder von dieser entfernt werden,
- eine Art von einer oder mehreren Achsen, die zu der Achskonfiguration hinzugefügt oder von dieser entfernt werden,
- eine Position einer oder mehrerer Achsen, die zu der Achskonfiguration hinzugefügt oder von dieser entfernt werden.

6. Computersystem (900) nach einem der Ansprüche 2 bis 5, wobei der Verarbeitungsschaltkreis (902) ferner konfiguriert ist, um die aktualisierte Achskonfiguration basierend auf einem trainierten statistischen Modell oder basierend auf einem vordefinierten heuristischen Modell vorherzusagen.

7. Computersystem (900) nach Anspruch 6, wobei das trainierte statistische Modell basierend auf Trainingsdaten von einem oder mehreren Trainingsfahrzeugen trainiert ist, die mit einer modifizierten Trainingsachskonfiguration fahren, und wobei die Trainingsdaten eines oder mehrere aus Folgendem umfassen:
- eine anfängliche Achskonfiguration des jeweiligen einen oder der jeweiligen mehreren Trainingsfahrzeuge,
- eine an der modifizierten Trainingsachskonfiguration des jeweiligen einen oder der jeweiligen mehreren Trainingsfahrzeuge durchgeführte Modifikation,
- ein Gewicht des jeweiligen einen oder der jeweiligen mehreren Trainingsfahrzeuge,
- eine Position des einen oder der mehreren Trainingsfahrzeuge,
- einen oder mehrere Fahrzeugbewegungsparameter des jeweiligen einen oder der jeweiligen mehreren Trainingsfahrzeuge.

8. Computersystem (900) nach einem der Ansprüche 1 bis 7, wobei der Verarbeitungsschaltkreis (902) konfiguriert ist, um vorherzusagen, dass eine Änderung einer Anzahl von Achsen in der Achskonfiguration stattgefunden hat, wenn sich das aktuell geschätzte Gewicht von dem zuvor geschätzten Gewicht um mehr als einen Schwellenwert unterscheidet.

9. Computersystem (900) nach Anspruch 8, wobei der Verarbeitungsschaltkreis (902) konfiguriert ist, um vorherzusagen, dass eine Änderung der Anzahl von Achsen in der Achskonfiguration stattgefunden hat, indem er konfiguriert ist, um basierend auf der Differenz zwischen dem zuvor geschätzten Gewicht und dem aktuellen Gewicht (W) des Fahrzeugs (1) eine Menge von Achsen vorherzusagen, die zu der Achskonfiguration hinzugefügt oder von der Achskonfiguration entfernt wurden.

10. Computersystem (900) nach Anspruch 9, wobei die Fahrzeugzustandsdaten angebend für eine aktuelle jeweilige Last sind, die auf mindestens eine Achse (10) bei einer jeweiligen vordefinierten Position des Fahrzeugs (1) angewendet wird, und wobei der Verarbeitungsschaltkreis (902) ferner konfiguriert ist, um eine jeweilige zuvor auf die mindestens eine Achse (10) angewendete Last zu erhalten, und wobei der Verarbeitungsschaltkreis (902) ferner konfiguriert ist, um einen Typ und/oder eine Position einer hinzugefügten oder entfernten Achse basierend auf einer Differenz zwischen der aktuellen jeweiligen auf die mindestens eine Achse (10) angewendeten Last und der zuvor auf die mindestens eine Achse (10) angewendeten Last vorherzusagen.

11. Fahrzeug (1), umfassend das Computersystem (900) nach einem der Ansprüche 1 bis 10.

12. Fahrzeug (1) nach Anspruch 11, wobei das Fahrzeug (1) mit einer hinzugefügten Achse (11) modifiziert ist.

13. Computerimplementiertes Verfahren zum Handhaben einer Achskonfiguration eines Fahrzeugs (1), wobei die Achskonfiguration mindestens angebend für eine Anzahl von Achsen des Fahrzeugs (1) ist, das Verfahren umfassend:
- durch einen Verarbeitungsschaltkreis (902) eines Computersystems (900), Erhalten (202, 802) von Fahrzeugzustandsdaten, die angebend für mindestens eine auf das Fahrzeug (1) angewendete Last sind,
- durch den Verarbeitungsschaltkreis (902), Erhalten (203, 803) der Achskonfiguration des Fahrzeugs (1),
- durch den Verarbeitungsschaltkreis (902), Schätzen (204, 804) eines aktuellen Gewichts (W) des Fahrzeugs (1) basierend auf den erhaltenen Fahrzeugzustandsdaten und basierend auf der Achskonfiguration des Fahrzeugs (1),
- durch den Verarbeitungsschaltkreis (902), Erhalten (205, 805) eines zuvor geschätzten Gewichts des Fahrzeugs (1);
wobei das Verfahren **dadurch gekennzeichnet ist, dass** es umfasst:
- durch den Verarbeitungsschaltkreis (902), basierend auf einer Differenz zwischen dem zuvor geschätzten Gewicht und dem aktuellen Gewicht (W) des Fahrzeugs (1), Vorhersagen (206, 806), ob eine Änderung der Achskonfiguration des Fahrzeugs (1) stattgefunden hat.

14. Computerprogrammprodukt, das Programmcode zum Durchführen, wenn er von dem Verarbeitungsschaltkreis (902) ausgeführt wird, des Verfahrens nach Anspruch 13 umfasst.

15. Nichtflüchtiges, computerlesbares Speichermedium, umfassend Anweisungen, die bei Ausführung durch einen Verarbeitungsschaltkreis (902) den Verarbeitungsschaltkreis (902) veranlassen, das Verfahren nach Anspruch 13 durchzuführen.

## Revendications

1. Système informatique (900) comprenant un système de circuits de traitement (902) configuré pour gérer une configuration d'essieux d'un véhicule (1), la configuration d'essieux indiquant au moins un nombre d'essieux du véhicule (1), le système de circuits de traitement (902) étant configuré en outre pour :
- obtenir des données de condition de véhicule indiquant au moins une charge appliquée au véhicule (1),
- obtenir la configuration d'essieux du véhicule (1),
- estimer un poids actuel (W) du véhicule (1) en fonction des données de condition de véhicule obtenues et en fonction de la configuration d'essieux du véhicule (1),
- obtenir un poids précédemment estimé du véhicule (1) ;
le système informatique (900) étant **caractérisé en ce que** le système de circuits de traitement est configuré pour :
- en fonction d'une différence entre le poids précédemment estimé et le poids actuel (W) du véhicule (1), prédire s'il y a eu un changement dans la configuration d'essieux du véhicule (1).

2. Système informatique (900) selon la revendication 1, dans lequel lors de la prédiction qu'il y a eu un changement dans la configuration d'essieux du véhicule (1), le système de circuits de traitement (902) est configuré en outre, en fonction de la différence entre le poids précédemment estimé et le poids actuel (W) du véhicule (1), pour prédire une configuration d'essieux mise à jour du véhicule (1).

3. Système informatique (900) selon l'une quelconque des revendications 1 à 2, dans lequel le système de circuits de traitement (902) est configuré en outre pour détecter le respect d'une condition de déclenchement, et dans lequel le système de circuits de traitement (902) est configuré pour estimer le poids actuel (W) du véhicule (1) et/ou pour obtenir les données de condition de véhicule en réponse au respect de la condition de déclenchement, dans lequel la condition de déclenchement comprend l'un quelconque ou plusieurs quelconques parmi :
- le véhicule (1) est détaché d'une remorque,
- le véhicule (1) a parcouru au moins une première distance prédéfinie depuis l'estimation du poids précédemment estimé,
- un laps de temps depuis l'estimation du poids précédemment estimé dépasse un seuil.

4. Système informatique (900) selon l'une quelconque des revendications 2 à 3, dans lequel le système de circuits de traitement (902) est configuré en outre pour adapter un ou plusieurs paramètres utilisés pour commander le véhicule (1) en fonction de la configuration d'essieux mise à jour.

5. Système informatique (900) selon l'une quelconque des revendications 2 à 4, dans lequel la configuration d'essieux mise à jour indique l'un quelconque ou plusieurs quelconques parmi :
- un nombre d'essieux ajoutés à, ou retiré de, la configuration d'essieux,
- un type d'un ou plusieurs essieux ajoutés à, ou retirés de, la configuration d'essieux,
- une position d'un ou plusieurs essieux ajoutés à, ou retirés de, la configuration d'essieux.

6. Système informatique (900) selon l'une quelconque des revendications 2 à 5, dans lequel le système de circuits de traitement (902) est configuré en outre pour prédire la configuration d'essieux mise à jour en fonction d'un modèle statistique entraîné, ou en fonction d'un modèle heuristique prédéfini.

7. Système informatique (900) selon la revendication 6, dans lequel le modèle statistique entraîné est entraîné en fonction de données d'entraînement d'un ou plusieurs véhicules d'entraînement se déplaçant avec une configuration d'essieux d'entraînement modifiée, et dans lequel les données d'entraînement comprennent l'un quelconque ou plusieurs quelconques parmi :
- une configuration d'essieux initiale du ou des véhicules d'entraînement respectifs,
- une modification mise en œuvre sur la configuration d'essieux d'entraînement modifiée du ou des véhicules d'entraînement respectifs,
- un poids du ou des véhicules d'entraînement respectifs,
- une position du ou des véhicules d'entraînement,
- un ou plusieurs paramètres de mouvement de véhicule du ou des véhicules d'entraînement respectifs.

8. Système informatique (900) selon l'une quelconque des revendications 1 à 7, dans lequel le système de circuits de traitement (902) est configuré pour prédire qu'il y a eu un changement dans un nombre d'essieux dans la configuration d'essieux lorsque le poids estimé actuel diffère du poids précédemment estimé de plus d'un seuil.

9. Système informatique (900) selon la revendication 8, dans lequel le système de circuits de traitement (902) est configuré pour prédire qu'il y a eu un changement dans le nombre d'essieux dans la configuration d'essieux en étant configuré pour prédire une quantité d'essieux qui ont été ajoutés ou retirés de la configuration d'essieux en fonction de la différence entre le poids précédemment estimé et le poids actuel (W) du véhicule (1).

10. Système informatique (900) selon la revendication 9, dans lequel les données de condition de véhicule indiquent une charge respective actuelle appliquée à au moins un essieu (10) avec une position prédéfinie respective du véhicule (1), et dans lequel le système de circuits de traitement (902) est configuré en outre pour obtenir une charge précédemment appliquée respective sur l'au moins un essieu (10), et dans lequel le système de circuits de traitement (902) est configuré en outre pour prédire un type et/ou une position d'un essieu ajouté ou retiré en fonction d'une différence entre la charge respective actuelle appliquée sur l'au moins un essieu (10) et la charge précédemment appliquée sur l'au moins un essieu (10).

11. Véhicule (1) comprenant le système informatique (900) selon l'une quelconque des revendications 1 à 10.

12. Véhicule (1) selon la revendication 11, dans lequel le véhicule (1) est modifié avec un essieu ajouté (11).

13. Procédé implémenté par ordinateur permettant de gérer une configuration d'essieux d'un véhicule (1), la configuration d'essieux indiquant au moins un nombre d'essieux du véhicule (1), le procédé comprenant :
- par un système de circuits de traitement (902) d'un système informatique (900), l'obtention (202, 802) de données de condition de véhicule indiquant au moins une charge appliquée au véhicule (1),
- par le système de circuits de traitement (902), l'obtention (203, 803) de la configuration d'essieux du véhicule (1),
- par le système de circuits de traitement (902), l'estimation (204, 804) d'un poids actuel (W) du véhicule (1) en fonction des données de condition de véhicule obtenues et en fonction de la configuration d'essieux du véhicule (1),
- par le système de circuits de traitement (902), l'obtention (205, 805) d'un poids précédemment estimé du véhicule (1) ;
le procédé étant **caractérisé en ce qu'**il comprend :
- par le système de circuits de traitement (902), en fonction d'une différence entre le poids précédemment estimé et le poids actuel (W) du véhicule (1), le fait de prédire (206, 806) s'il y a eu un changement dans la configuration d'essieux du véhicule (1).

14. Produit programme informatique comprenant un code de programme permettant de mettre en œuvre, lorsqu'il est exécuté par le système de circuits de traitement (902), le procédé selon la revendication 13.

15. Support de stockage non transitoire lisible par ordinateur comprenant des instructions, qui lorsqu'elles sont exécutées par le système de circuits de traitement (902), amènent le système de circuits de traitement (902) à mettre en œuvre le procédé selon la revendication 13.
